(19) Europäisches Patentamt
European Patent Office
Office européen des brevets

(11) **EP 2 704 156 A1**

(12) **EUROPEAN PATENT APPLICATION**
published in accordance with Art. 153(4) EPC

(43) Date of publication:
**05.03.2014 Bulletin 2014/10**

(51) Int Cl.:
*H01B 1/22* (2006.01)   *C09D 5/24* (2006.01)
*C09D 11/00* (2014.01)   *C09D 201/00* (2006.01)
*H01B 1/00* (2006.01)   *H01B 5/14* (2006.01)

(21) Application number: **12776484.3**

(22) Date of filing: **27.04.2012**

(86) International application number:
**PCT/JP2012/061474**

(87) International publication number:
**WO 2012/147964 (01.11.2012 Gazette 2012/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2011 JP 2011101584**

(71) Applicant: **Fujifilm Corporation**
**Tokyo**
**160-8620 (JP)**

(72) Inventor: **HOTTA Yoshinori**
**Haibara-gun**
**Shizuoka 421-0396 (JP)**

(74) Representative: **HOFFMANN EITLE**
**Patent- und Rechtsanwälte**
**Arabellastrasse 4**
**81925 München (DE)**

(54) **DISPERSION LIQUID CONTAINING METAL NANOWIRES, AND CONDUCTIVE FILM**

(57)    The purpose of the present invention is to provide a dispersion liquid containing metal nanowires of excellent dispersion stability, and a conductive film that is formed using the dispersion liquid. This dispersion liquid is a dispersion liquid that contains metal nanowires. The metal nanowires are 10-200 nm in diameter, the coefficient of variation in diameter being less than 30%, and the ratio of the length to the diameter (length/diameter) being 10 or greater. The metal nanowires are metal members having as the principal constituent at least one metal selected from the group consisting of gold, nickel, and copper.

FIG. 1

**Description**

TECHNICAL FIELD

The present invention relates to a dispersion containing metal nanowires and a conductive film formed by using the dispersion.

BACKGROUND ART

Various studies have recently been made on conductive materials using metal nanowires and metal nanopillars.
For example, it is already known that porous alumina is used as such a conductive material serving as a template for manufacturing a nanomaterial (see Patent Literatures 1 to 3), and the applicant of the present invention also proposes a nanopillar metal member or a nanorod metal member that is a metal member having an aspect ratio of 5 or more and produced by filling a metal into micropores of an anodized film having a degree of ordering of 70% or more at an aspect ratio of 5 or more, followed thereafter by baking in an inert gas atmosphere or in a vacuum at a temperature of at least 300°C but up to 1,000°C to improve the crystallinity and removing the anodized film (Patent Literature 4).

CITATION LIST

PATENT LITERATURE

Patent Literature 1: JP 2005-256102 A
Patent Literature 2: JP 2006-62049 A
Patent Literature 3: JP 2010-156005 A
Patent Literature 4: JP 2010-189695 A

SUMMARY OF INVENTION

TECHNICAL PROBLEMS

The inventor of the invention has made a study on the metal member described in Patent Literature 4 and in particular the nanowire (also referred to as "nanorod" in Patent Literature 4) and as a result, in cases where the nanowires described in Patent Literature 4 are incorporated in the dispersion and used, the dispersion stability may be poor, for example, depending on the metal material and the coefficient of diameter variation of the nanowires.
Accordingly, the invention aims at providing a dispersion containing metal nanowires having excellent dispersion stability and a conductive film formed by using the dispersion.

SOLUTION TO PROBLEMS

The inventor of the invention has made an intensive study to achieve the foregoing object and as a result found that a dispersion having excellent dispersion stability can be prepared by using metal nanowires for which a specific metal is used and each of which has a diameter satisfying a specific coefficient of variation. The invention has been thus completed. Specifically, the invention provides the following (1) to (8).

(1) A dispersion comprising metal nanowires,
wherein each of the metal nanowires has a diameter of 10 to 200 nm, a coefficient of diameter variation of less than 30% and a ratio of a length to the diameter (length / diameter) of 10 or more, and
wherein the metal nanowires are metal members primarily composed of at least one metal selected from the group consisting of gold, nickel and copper.
(2) The dispersion according to (1), wherein each of the metal nanowires has a core and a surface layer covering the core, and a metal constituting the core is different from a metal constituting the surface layer.
(3) The dispersion according to (1) or (2), further comprising a surfactant having an HLB value of 10 or more.
(4) The dispersion according to any one of (1) to (3), further comprising an inorganic glass ingredient containing at least one element selected from the group consisting of silicon, lithium, boron and phosphorus.
(5) The dispersion according to any one of (1) to (4) for use in a conductive ink.
(6) A conductive film formed by using the dispersion according to any one of (1) to (5).

(7) The conductive film according to (6), wherein the metal nanowires are contained in an amount of 0.005 to 1 g/m$^2$.

(8) The conductive film according to (6) or (7) for use in a transparent conductive film.

ADVANTAGEOUS EFFECTS OF INVENTION

As will be described later, the invention can provide a dispersion containing metal nanowires having excellent dispersion stability and a conductive film formed by using the dispersion.

BRIEF DESCRIPTION OF DRAWINGS

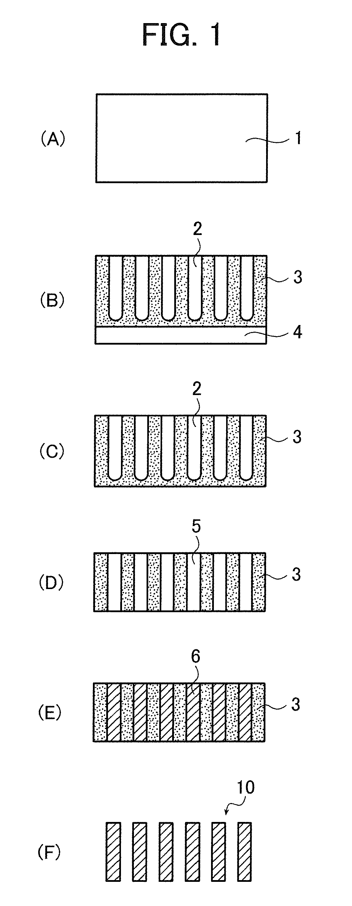

[FIG. 1] FIG. 1 shows schematic cross-sectional views of an example of a method of manufacturing metal nanowires contained in the dispersion of the invention.

DESCRIPTION OF EMBODIMENTS

[Dispersion]

The dispersion of the invention is described below in detail.

The dispersion of the invention is a dispersion comprising metal nanowires, wherein each of the metal nanowires has a diameter of 10 to 200 nm, a coefficient of diameter variation of less than 30% and a ratio of a length to the diameter (length / diameter) of 10 or more, and the metal nanowires are metal members primarily composed of at least one metal selected from the group consisting of gold (Au), nickel (Ni) and copper (Cu).

Next, the metal nanowires, a dispersion solvent and arbitrary ingredients constituting the dispersion of the invention are described.

[Metal Nanowire]

(1) Shape

The diameter of the metal nanowires contained in the dispersion of the invention is from 10 to 200 nm in terms of the stability of the metal nanowires themselves.

The diameter of the metal nanowires is preferably from 10 to 100 nm and more preferably from 10 to 50 nm because the dispersion of the invention can be advantageously used to form a transparent conductive film while ensuring the transparency.

The diameter of the metal nanowires can be determined by observing a TEM image with, for example, a field emission scanning electron microscope (FE-SEM) or a transmission electron microscope (TEM). In the practice of the invention, the diameter of the metal nanowires is determined by observing 300 metal nanowires with FE-SEM and calculating the average value.

In the practice of the invention, the coefficient of variation (CV) in the diameter of the metal nanowires is less than 30%, preferably from 5 to 20% and more preferably from 5 to 10%.

When the coefficient of variation is within the above range, the dispersion stability of the dispersion of the invention is enhanced while suppressing the agglomeration of the metal nanowires.

The coefficient of variation in the diameter of the metal nanowires can be determined from the formula shown below, for example, by measuring the diameter of 300 nanowires on a transmission electron microscope (TEM) image and calculating its standard deviation and the average value.

$$\text{(Coefficient of diameter variation)} = \text{(standard deviation of diameter)} / \text{(average diameter)}$$

In the practice of the invention, the ratio of the length to the diameter of the metal nanowires (length / diameter) (hereinafter also referred to as "aspect ratio") is 10 or more.

When the aspect ratio is within the above range, the dispersion stability of the dispersion of the invention is enhanced while suppressing entanglement of the metal nanowires.

The aspect ratio of the metal nanowires is preferably up to 2,000 and more preferably from 100 to 1,000 because the dispersion stability of the dispersion of the invention is more excellent, the amount of the dispersion of the invention used in the formation of the conductive film is reduced, and the dispersion of the invention can be advantageously used to prepare the transparent conductive film.

(2) Ingredients

The metal nanowires contained in the dispersion of the invention are metal members primarily composed of at least one metal selected from the group consisting of Au, Ni and Cu.

The term "primarily composed of" is used herein to denote that at least one metal selected from Au, Ni and Cu accounts for 80 wt% or more of the metals constituting the metal nanowire.

In the practice of the invention, it is preferred for each of the metal nanowires to have a core and a surface layer covering the core, and for the metal constituting the core to be different from the metal constituting the surface layer because the resistance of the contact between the metal nanowires is reduced and the dispersion stability is more excellent. More specifically, it is more preferred for the core of each of the metal nanowires to be primarily composed of Ni or Cu and for the surface layer covering the core to be primarily composed of Au.

In addition, an intermediate layer is more preferably provided between the core and the surface layer in order to improve the adhesion therebetween. More specifically, each of the metal nanowires more preferably includes the core which is primarily composed of Cu, the surface layer covering the core which is primarily composed of Au and the intermediate layer which is primarily composed of Ni and is provided therebetween.

(3) Content

The content (concentration) of the metal nanowires contained in the dispersion of the invention is preferably from 0.1 to 30 wt% and more preferably from 0.1 to 25 wt% with respect to the total weight of the dispersion of the invention because good dispersion stability is maintained over time while also enhancing the uniformity upon dilution.

(4) Preparation Method

The method of preparing the metal nanowires contained in the dispersion of the invention is not particularly limited and the metal nanowires can be prepared, for example, by a method which involves filling a specified metal into through-holes in an insulating base used as the starting material and dissolving and removing only the insulating base.

In the practice of the invention, an alumina base obtained by subjecting aluminum to anodizing treatment is preferably used as the insulating base having through-holes.

When the alumina base is used, as shown in FIGS. 1(A) to 1(F), metal nanowires 10 contained in the dispersion (not shown) of the invention can be obtained by subjecting an aluminum substrate 1 at least to, in order,
a treatment in which an anodized film 3 having micropores 2 is formed by anodizing treatment (anodizing treatment);
a treatment in which an aluminum base (a part of the aluminum substrate which did not undergo the anodizing treatment and this also applies to the following description) 4 from the anodized film 3 formed by the anodizing treatment (aluminum base removal treatment);
a treatment in which the micropores 2 present in the anodized film 3 after the removal of the aluminum base 4 by the aluminum base removal treatment are made to extend completely through the anodized film (perforating treatment);
a treatment which follows the perforating treatment and in which a metal 6 is filled into through-holes 5 in the resulting insulating base (metal filling treatment); and
a treatment which follows the metal filling treatment and in which the anodized film 3 is dissolved and removed (anodized film removal treatment).

Next, the aluminum substrate that may be used to manufacture the alumina base, and each treatment carried out on the aluminum substrate are described in detail.

<Aluminum Substrate>

The aluminum substrate is not subject to any particular limitation. Illustrative examples include pure aluminum plate; alloy plates primarily composed of aluminum and containing trace amounts of other elements; substrates made of low-purity aluminum (e.g., recycled material) on which high-purity aluminum has been vapor-deposited; substrates such as silicon wafers, quartz or glass whose surface has been covered with high-purity aluminum by a process such as vapor deposition or sputtering; and resin substrates on which aluminum has been laminated.

In the practice of the invention, of the aluminum substrate, the surface to be subjected to anodizing treatment to be described later has an aluminum purity of preferably at least 99.5 wt%, more preferably at least 99.9 wt% and even more preferably at least 99.99 wt%.

An aluminum purity within the foregoing range is preferred because the micropores are sufficiently independent of each other to retain the independence when a metal is filled into the through-holes obtained by making the micropores extend completely through the anodized film and the metal nanowires are obtained in a state in which they are independent of each other by dissolving the insulating base (alumina base).

In the practice of the invention, the surface of the aluminum substrate on which anodizing treatment to be described later is to be carried out is preferably subjected beforehand to degreasing treatment and mirror-like finishing treatment. In particular, the aluminum substrate surface is preferably subjected to heat treatment beforehand in order to improve the independence of the micropores.

<Heat Treatment>

Heat treatment is preferably carried out at a temperature of 200 to 350°C for a period of about 30 seconds to about 2 minutes. More specifically, an exemplary method involves putting an aluminum substrate in a heated oven.

Such heat treatment improves the independence of the micropores formed by anodizing treatment to be described later.

Following heat treatment, it is preferable to rapidly cool the heat-treated aluminum substrate. The method of cooling is exemplified by a method involving direct immersion of the aluminum substrate in water or the like.

<Degreasing Treatment>

Degreasing treatment is carried out with a suitable substance such as an acid, alkali or organic solvent so as to dissolve and remove organic substances including dust, grease and resins which are adhering to the aluminum substrate surface, and thereby prevent defects due to organic substances from arising in each of the treatments to be described below.

Illustrative examples of degreasing treatment include: a method in which an organic solvent such as various alcohols (e.g., methanol), various ketones (e.g., methyl ethyl ketone), benzin or volatile oil is contacted with the surface of the aluminum substrate at ambient temperature (organic solvent method); a method in which a liquid containing a surfactant such as soap or a neutral detergent is contacted with the surface of the aluminum substrate at a temperature of from ambient temperature to 80°C, after which the surface is rinsed with water (surfactant method); a method in which an aqueous sulfuric acid solution having a concentration of 10 to 200 g/L is contacted with the surface of the aluminum substrate at a temperature of from ambient temperature to 70°C for a period of 30 to 80 seconds, after which the surface is rinsed with water; a method in which an aqueous solution of sodium hydroxide having a concentration of 5 to 20 g/L is contacted with the surface of the aluminum substrate at ambient temperature for about 30 seconds while electrolysis is carried out by passing a direct current through the aluminum substrate surface as the cathode at a current density of 1 to 10 A/dm$^2$, after which the surface is contacted with an aqueous solution of nitric acid having a concentration of 100 to 500 g/L and thereby neutralized; a method in which any of various known anodizing electrolytic solutions is contacted with the surface of the aluminum substrate at ambient temperature while electrolysis is carried out by passing a direct current at a current density of 1 to 10 A/dm$^2$ through the aluminum substrate surface as the cathode or by passing an alternating current through the aluminum substrate surface as the cathode; a method in which an aqueous alkali solution having a concentration of 10 to 200 g/L is contacted with the surface of the aluminum substrate at 40 to 50°C for 15 to 60 seconds, after which an aqueous solution of nitric acid having a concentration of 100 to 500 g/L is contacted with the surface and thereby neutralized; a method in which an emulsion prepared by mixing a surfactant, water and the like into an oil such as gas oil or kerosene is contacted with the surface of the aluminum substrate at a temperature of from ambient temperature to 50°C, after which the surface is rinsed with water (emulsion degreasing method); and a method in which a mixed solution of, for example, sodium carbonate, phosphates and a surfactant is contacted with the surface of the aluminum substrate at a temperature of from ambient temperature to 50°C for 30 to 180 seconds, after which the surface is rinsed with water (phosphate method).

Of these, the organic solvent method, surfactant method, emulsion degreasing method and phosphate method are preferred from the standpoint of removing grease from the aluminum surface while causing substantially no aluminum dissolution.

Known degreasers may be used in degreasing treatment. More specifically, degreasing treatment may be carried out, for example, using any of various commercially available degreasers by the prescribed method.

<Mirror-Like Finishing Treatment>

Mirror-like finishing treatment is carried out to eliminate surface topographic features of the aluminum substrate (e.g., rolling streaks formed during rolling of the aluminum substrate) and improve the uniformity and reproducibility of sealing treatment using, for example, electrodeposition.

In the practice of the invention, mirror-like finishing treatment is not subject to any particular limitation, and may be carried out using any suitable method known in the art. Examples of suitable methods include mechanical polishing, chemical polishing, and electrolytic polishing.

Illustrative examples of suitable mechanical polishing methods include polishing with various commercial abrasive cloths, and methods that combine the use of various commercial abrasives (e.g., diamond, alumina) with buffing. More specifically, a method which is carried out with an abrasive while changing over time the abrasive used from one having coarser particles to one having finer particles is appropriately illustrated. In such a case, the final abrasive used is preferably one having a grit size of 1500. In this way, a glossiness of at least 50% (in the case of rolled aluminum, at least 50% in both the rolling direction and the transverse direction) can be achieved.

Examples of chemical polishing methods include various methods mentioned in the 6th edition of Aluminum Handbook (Japan Aluminum Association, 2001), pp. 164-165.

Preferred examples include phosphoric acid/nitric acid method, Alupol I method, Alupol V method, Alcoa R5 method, $H_3PO_4$-$CH_3COOH$-Cu method and $H_3PO_4$-$HNO_3$-$CH_3COOH$ method. Of these, the phosphoric acid/nitric acid method, the $H_3PO_4$-$CH_3COOH$-Cu method and the $H_3PO_4$-$HNO_3$-$CH_3COOH$ method are especially preferred.

With chemical polishing, a glossiness of at least 70% (in the case of rolled aluminum, at least 70% in both the rolling direction and the transverse direction) can be achieved.

Examples of electrolytic polishing methods include various methods mentioned in the 6th edition of Aluminum Handbook (Japan Aluminum Association, 2001), pp. 164-165; the method described in US 2,708,655 B; and the method described in Jitsumu Hyomen Gijutsu (Practice of Surface Technology), Vol. 33, No. 3, pp. 32-38 (1986).

With electrolytic polishing, a glossiness of at least 70% (in the case of rolled aluminum, at least 70% in both the rolling direction and the transverse direction) can be achieved.

These methods may be suitably combined and used. In an illustrative method that may be preferably used, mechanical polishing which is carried out by changing the abrasive over time from one having coarser particles to one having finer particles is followed by electrolytic polishing.

Mirror-like finishing treatment enables a surface having, for example, a mean surface roughness $R_a$ of 0.1 $\mu$m or less and a glossiness of at least 50% to be obtained. The mean surface roughness $R_a$ is preferably 0.03 $\mu$m or less, and more preferably 0.02 $\mu$m or less. The glossiness is preferably at least 70%, and more preferably at least 80%.

The glossiness is the specular reflectance which can be determined in accordance with JIS Z8741-1997 (Method 3: 60° Specular Gloss) in a direction perpendicular to the rolling direction. Specifically, measurement is carried out using a variable-angle glossmeter (e.g., VG-1D, manufactured by Nippon Denshoku Industries Co., Ltd.) at an angle of incidence/reflection of 60° when the specular reflectance is 70% or less, and at an angle of incidence/reflection of 20° when the specular reflectance is more than 70%.

<Anodizing Treatment>

The anodizing treatment is a step for anodizing the aluminum substrate to form a micropore-bearing anodized film at the surface of the aluminum substrate.

Conventionally known methods may be used for the anodizing treatment. However, it is important for the micropores to be independent of each other in terms of the dispersion stability of the metal nanowires in the dispersion of the invention and therefore the anodizing treatment is preferably performed according to any of the self-ordering methods described in, for example, JP 3,714,507 B, JP 2002-285382 A, JP 2006-124827 A, JP 2007-204802 A, JP 2007-231339 A, JP 2007-231405 A, JP 2007-231340 A, JP 2007-238988 A, and JP 2010-189695 A. These treatments are preferably those described under the treatment conditions in the foregoing patent and published patent applications.

Other processes for forming independent micropores include, for example, processes which use imprinting (transfer processes and press patterning processes in which a plate or roll having projections thereon is pressed against the aluminum substrate to form pits at the substrate). A specific example is a process in which a plate having numerous projections on a surface thereof is pressed against the aluminum substrate surface, thereby forming pits. For example, the process described in JP 10-121292 A may be used.

There is also a process in which polystyrene spheres are densely arranged on the surface of the aluminum substrate, $SiO_2$ is vapor-deposited thereon, then the polystyrene spheres are removed and the substrate is etched using the vapor-deposited $SiO_2$ as the mask, thereby forming pits.

Another exemplary process is a particle beam process. In the particle beam process, pits are formed by irradiating the surface of the aluminum substrate with a particle beam. This process has the advantage that the positions of the pits can be controlled as desired.

Examples of the particle beam include a charged particle beam, a focused ion beam (FIB), and an electron beam.

For example, the process described in JP 2001-105400 A may also be used as the particle beam process.

A block copolymer process may also be used. The block copolymer process involves forming a block copolymer layer on the surface of the aluminum substrate, forming an islands-in-the-sea structure in the block copolymer layer by thermal annealing, then removing the island components to form pits.

For example, the process described in JP 2003-129288 A may be used as the block copolymer process.

A resist patterning/exposure/etching process may also be used. In the resist patterning/exposure/etching process, a resist film formed on the surface of the aluminum substrate is exposed and developed by photolithography or electron beam lithography to form a resist pattern. The resist is then etched to form pits which pass entirely through the resist to the surface of the aluminum substrate.

In the case of using such processes as imprinting process, particle beam process, block copolymer process and resist patterning/exposure/etching process, these treatments for giving starting points for electrolysis to the aluminum substrate surface are followed by anodizing treatment to enable an anodized film having independent micropores to be formed at the surface of the aluminum substrate.

<Aluminum Base Removal Treatment>

The aluminum removal treatment is a step in which the aluminum base is dissolved and removed from the anodized film formed by the anodizing treatment.

A treatment solution which does not readily dissolve the anodized film (alumina) but readily dissolves aluminum is used for dissolution of the aluminum base.

That is, use is made of a treatment solution which has an aluminum dissolution rate of at least 1 $\mu$m/min, preferably at least 3 $\mu$m/min, and more preferably at least 5 $\mu$m/min, and has an anodized film (alumina) dissolution rate of 0.1 nm/min or less, preferably 0.05 nm/min or less, and more preferably 0.01 nm/min or less.

Specifically, a treatment solution which includes at least one metal compound having a lower ionization tendency than aluminum, and which has a pH of 4 or less or 8 or more, preferably 3 or less or 9 or more, and more preferably 2 or less or 10 or more is used.

Such a treatment solution is not particularly limited if it does not dissolve the anodized film (alumina) but dissolves aluminum. Examples thereof include aqueous solutions of mercury chloride, a bromine/methanol mixture, a bromine/ ethanol mixture, aqua regia, and a hydrochloric acid/copper chloride mixture.

The concentration is preferably from 0.01 to 10 mol/L and more preferably from 0.05 to 5 mol/L.

The treatment temperature is preferably from -10 to 80°C and preferably from 0 to 60°C.

Dissolution of the aluminum base is carried out by bringing the aluminum substrate having undergone the anodizing treatment into contact with the above-described treatment solution. Examples of the contacting method include, but are not limited to, immersion and spraying. Of these, immersion is preferred. The period of contact in this process is preferably from 10 seconds to 5 hours, and more preferably from 1 minute to 3 hours.

The anodized film after dissolution of the aluminum base preferably has a thickness of 1 to 1,000 $\mu$m and more preferably 10 to 500 $\mu$m.

After the dissolution of the aluminum base, the anodized film is preferably rinsed with water before making micropores penetrate therethrough by the procedure described below. The anodized film is preferably rinsed with water at a temperature of 30°C or less in order to suppress changes in the micropore size due to hydration.

<Perforating Treatment>

The perforating treatment is a step in which only the bottom of the anodized film from which the aluminum base has been removed by the aluminum base removal treatment is removed to make the micropores present in the anodized film penetrate therethrough.

This treatment is carried out by bringing only the bottom of the anodized film into contact with an aqueous acid solution or an aqueous alkali solution. Removal of the bottom of the anodized film causes the micropores to penetrate therethrough to form the through-holes.

It is preferable for at least 70%, more preferably at least 85% and even more preferably at least 95% of the micropores present in the anodized film to penetrate therethrough by this treatment.

The bottom of the anodized film is preferably removed by the method that involves previously immersing the anodized film in a pH buffer solution to fill the micropores with the pH buffer solution from the micropore opening side, and bringing the surface opposite from the openings (i.e., the bottom of the anodized film) into contact with an aqueous acid solution or aqueous alkali solution.

When this treatment is to be carried out with an aqueous acid solution, it is preferable to use an aqueous solution of an inorganic acid such as sulfuric acid, phosphoric acid, nitric acid or hydrochloric acid, or a mixture thereof. The aqueous acid solution preferably has a concentration of 1 to 10 wt%. The aqueous acid solution preferably has a temperature of 25 to 40°C.

In addition, when this treatment is to be carried out with an aqueous alkali solution, it is preferable to use an aqueous solution of at least one alkali selected from the group consisting of sodium hydroxide, potassium hydroxide and lithium hydroxide. The aqueous alkali solution preferably has a concentration of 0.1 to 5 wt%. The aqueous alkali solution preferably has a temperature of 20 to 35°C.

Specific examples of solutions that may be preferably used include a 40°C aqueous solution containing 50 g/L of phosphoric acid, a 30°C aqueous solution containing 0.5 g/L of sodium hydroxide, and a 30°C aqueous solution containing 0.5 g/L of potassium hydroxide.

The time of immersion in the aqueous acid solution or aqueous alkali solution is preferably from 8 to 120 minutes, more preferably from 10 to 90 minutes and even more preferably from 15 to 60 minutes.

After the perforating treatment of the micropores, the anodized film preferably has a thickness of 1 to 1,000 $\mu$m and more preferably 10 to 500 $\mu$m.

After the perforating treatment of the micropores, the anodized film is rinsed with water. The anodized film is preferably rinsed with water at a temperature of 30°C or less in order to suppress changes in the diameter of the through-holes due to hydration.

Any other treatment process than the above-described treatment process may be used in the perforating treatment as long as the micropores formed by the anodizing treatment can be made to penetrate through the anodized film. In the above-described treatment, the anodizing treatment is performed to form the micropore-bearing anodized film on the aluminum substrate; the aluminum base removal treatment is performed to dissolve the aluminum base; and the perforating treatment is performed to partially dissolve the anodized film to remove the bottom of the anodized film thereby making the micropores penetrate through the anodized film. However, a treatment process in which the aluminum substrate is removed while at the same time the micropores are made to penetrate through the anodized film may instead be used.

To be more specific, an illustrative method that may be preferably used includes one that involves physically removing the lower portion of the anodized film formed by the anodizing treatment, that is, the portion of the anodized film on the aluminum substrate side through cutting with a laser or by various other polishing treatments to thereby form an anodized film (insulating base) having through-holes.

<Metal Filling Treatment>

The metal filling treatment is a step in which a metal is filled into the through-holes of the anodized film.

An electrolytic plating process or an electroless plating process may be used in the method of filling a metal into the through-holes.

In particular, a method in which the treatments (1) and (2) described below using the electrolytic plating process are performed in this order is preferable because a metal can be filled into the through-holes at a high filling rate.

(1) a treatment in which an electrode film having no voids is formed on one surface of the insulating base having through-holes (electrode film-forming treatment); and
(2) a metal filling treatment using electrolytic plating.

(Electrode Film-Forming Treatment)

The electrode film-forming treatment is a treatment which is carried out after the perforating treatment to form an electrode film having no voids on one surface of the anodized film having through-holes.

The anodized film has on its surface openings of the through-holes but, by carrying out this treatment to form the electrode film having no voids on the surface of the anodized film, the openings of the through-holes on one side are covered with the electrode film.

There is no particular limitation on the method of forming the electrode film as long as the electrode film having no voids can be formed on one surface of the anodized film having the through-holes.

Specific examples of the forming method include electroless plating of a metal and direct application of a metal. Of these, electroless plating is preferable in terms of the uniformity of the electrode film and the ease of operation.

When electroless plating is used for the electrode film-forming treatment, it is necessary to form plating nuclei on one surface of the anodized film.

More specifically, a method is preferably used in which a metal or metal compound of the same type as a specific metal to be provided by electroless plating or a metal or metal compound having a higher ionization tendency than a specific metal to be provided by electroless plating is provided on one surface of the anodized film.

Exemplary methods of providing such a metal or metal compound include vapor deposition and direct application, but the invention is not particularly limited to these methods.

After the plating nuclei have been provided as described above, the electrode film is formed by electroless plating. Immersion is a preferable treatment method from the viewpoint that the thickness of the electrode layer can be controlled by the temperature and the time.

Use may be made of any conventionally known type of electroless plating solution. The concentration is preferably in a range of 1 to 300 g/L and more preferably 100 to 200 g/L.

Noble metal-containing plating solutions such as a gold plating solution, a copper plating solution and a silver plating solution are preferable in terms of increasing the electrical continuity of the electrode film to be formed, and a gold plating solution is more preferable in terms of the long-term stability of the electrode, that is, the prevention of the deterioration due to oxidation.

The electrode film formed preferably has a thickness of 0.05 $\mu$m to 100 $\mu$m, more preferably 0.1 $\mu$m to 50 $\mu$m, and most preferably 0.2 $\mu$m to 20 $\mu$m. The electrode film does not have sufficient electrical conductivity at a smaller thickness than the foregoing range, and more time is required for its formation at a thickness exceeding the foregoing range. These thickness ranges are therefore not preferred.

The treatment temperature and the treatment time of electroless plating depend on the thickness of the electrode that may be formed, and the treatment is preferably carried out at 0°C to 90°C for 1 minute to 10 hours, more preferably at 5°C to 75°C for 10 minutes to 7 hours, and most preferably at 10°C to 60°C for 30 minutes to 5 hours.

(Metal Filling Treatment)

The metal filling treatment is a treatment which follows the electrode film-forming treatment and in which electrolytic plating using the electrode film formed is carried out to fill a metal into the through-holes of the anodized film.

In a conventionally known electrolytic plating process that is used for coloring or other purposes, it is difficult to selectively deposit (grow) a metal inside through-holes at a high aspect ratio presumably because the deposited metal is consumed inside the through-holes and the plating does not grow even when electrolysis is carried out for at least a fixed period of time.

Therefore, in the practice of the invention, when metal filling is carried out by electrolytic plating, it is preferred to provide rest periods during pulse electrolysis or controlled-potential electrolysis. The rest periods must be at least 10 seconds, and are preferably from 30 to 60 seconds.

To promote stirring of the electrolytic solution, it is desirable to apply ultrasound.

Moreover, the electrolysis voltage is generally not more than 20 V, and desirably not more than 10 V, although it is preferable to first measure the deposition potential of the target metal in the electrolytic solution to be used and carry out controlled-potential electrolysis at that potential + not more than 1 V. When carrying out controlled-potential electrolysis, it is desirable to use also cyclic voltammetry. To this end, use may be made of potentiostats such as those available from Solartron, BAS Inc., Hokuto Denko Corporation and Ivium Technologies.

A conventionally known plating solution may be used.

More specifically, when copper is to be deposited, an aqueous solution of copper sulfate is commonly used. The concentration of the copper sulfate is preferably from 1 to 300 g/L, and more preferably from 100 to 200 g/L. Deposition can be promoted by adding hydrochloric acid to the electrolytic solution. In such a case, the concentration of hydrochloric acid is preferably from 10 to 20 g/L.

When gold is to be deposited, it is desirable to carry out plating by alternating current electrolysis using a solution of tetrachloroauric acid in sulfuric acid.

When nickel is to be deposited, an aqueous solution of nickel sulfate is commonly used and the concentration of the nickel sulfate is preferably from 1 to 300 g/L.

It is preferable in electrolytic plating to preliminarily hydrophilize the inner surfaces of the through-holes to form a protective film so that the through-holes are more easily filled with a plating solution. In this case, an illustrative example of the method that may be preferably used includes a silicate treatment which involves providing elemental silicon to the inner surfaces of the through-holes to form a protective film.

The method of providing elemental silicon to the inner surfaces of the through-holes to form a protective film is not subject to any particular limitation, although a commonly used method of treatment involves direct immersion in an aqueous solution in which an alkali metal silicate is dissolved. The thickness of the protective film can be adjusted by varying the ratio between the silicate ingredients, that is, silicon dioxide $SiO_2$ and an alkali metal oxide $M_2O$ (generally represented as the molar ratio $[SiO_2]/[M_2O]$) and the concentrations thereof in the aqueous solution of the alkali metal silicate.

It is especially preferable here to use sodium or potassium as M.

The molar ratio $[SiO_2]/[M_2O]$ is preferably from 0.1 to 5.0, and more preferably from 0.5 to 3.0.

The $SiO_2$ content is preferably from 0.1 to 20 wt%, and more preferably from 0.5 to 10 wt%.

The metal filling treatment is followed by the removal of the electrode film from the oxide film surface to obtain the state shown in FIG. 1(E), that is, the state in which the metal 6 is filled into the through-holes 5 of the anodized film 3.

In the embodiment shown in FIG. 1, all the through-holes 5 present in the anodized film 3 are filled with the metal 6 but it is not necessarily required for all the through-holes 5 present in the anodized film 3 to be filled with the metal 6.

However, in the practice of the invention, the ratio of the through-holes 5 filled with the metal 6 to the through-holes 5 present in the anodized film 3, in short, the filling rate of the metal 6 is preferably at least 80% because a larger number of metal nanowires can be formed.

The filling ratio of the metal 6 can be determined by observing the surface of the insulating base 3 by SEM and calculating the ratio of the number of the through-holes 5 filled with the metal 6 to the number of all the through-holes 5 within the field of view.

The filling rate of the metal 6 is preferably at least 90% and more preferably at least 95%.

In the practice of the invention, according to the method in which the above-described steps (1) and (2) are performed in this order in the metal filling treatment, the metal can be filled into the through-holes present in the anodized film at a high filling rate and the filling rate of the metal into the through-holes may be 80% or more.

On the other hand, surface planarization to be described below is preferably carried out to remove the electrode film from the oxide film surface.

<Surface Planarization Treatment>

In the practice of the invention, the metal filling treatment is preferably followed by chemical mechanical polishing (CMP) to carry out surface planarization treatment whereby the front side and the back side of the anodized film are planarized.

By carrying out surface planarization treatment, the electrode film formed on one surface of the anodized film is removed. The front and back sides of the anodized film after the through-holes have been filled with a metal can be planarized while removing excess metal adhering to the surfaces.

CMP treatment may be carried out using a CMP slurry such as PNANERLITE-7000 available from Fujimi Inc., GPX HSC800 available from Hitachi Chemical Co., Ltd., or CL-1000 available from AGC Seimi Chemical Co., Ltd.

It is not preferred to use a slurry for interlayer dielectric films and barrier metals, because the anodized film should not be polished.

<Anodized Film Removal Treatment>

The anodized film removal treatment is a step which follows the metal filling treatment and in which the anodized film is dissolved and removed to form the metal nanowires.

A solvent which does not dissolve the metal filled into the through-holes but selectively dissolves alumina may be used to dissolve the anodized film, and any of an alkali solution and an acid solution may be used.

In the practice of the invention, a mixed aqueous solution of chromic acid and phosphoric acid is preferably used because the anodized film can be dissolved at a low temperature (room temperature).

The metal nanowires after the dissolution of the anodized film can be collected by filtering the solvent used to dissolve the anodized film through a filter or the like but for example the following methods may also be appropriately used to collect the metal nanowires.

(a) When a strongly alkaline solution is used as the solvent, the metal nanowires can be collected in a neutral dispersion solvent by trapping the metal nanowires through application of a strong electric field, replacing only the solvent, and repeating this operation.
(b) The metal nanowires are separated in the same manner as in flotation by generating nanobubbles.
(c) Centrifugation is performed.
(d) The metal wires are ionized and separated by ion exchange.
(e) When Ni is used as the metal, the Ni nanowires can be collected in a neutral dispersion solvent by trapping the Ni nanowires with the use of a magnetic force, replacing only the solvent, and repeating this operation.
(f) It is possible to extend and use the method (e) by adding Ni to the metal nanowires (for example, by filling a small amount of Ni at the end of the metal filling treatment or coating the metal nanowires with a magnetic material).
(g) The metal nanowires coated with Au are collected by trapping with a -SH group-containing surface.

<Method of Forming Surface Layer or the Like>

As described above, it is preferred for each of the metal nanowires contained in the dispersion of the invention to have a core and a surface layer covering the core, and for the metal constituting the core to be different from the metal constituting the surface layer.

Examples of the process for coating the metal nanowires with metal include plating processes such as an electrolytic plating process, a reduction electroless plating process and a displacement electroless plating process (hereinafter referred to as "displacement plating process,"); a vacuum evaporation process; and a sputtering process.

Of these, the displacement plating process is preferred because the surfaces of the isolated metal nanowires each having a very fine structure can be coated with a thin layer having a thickness of a few nanometers without changing so much their structure and form.

An aqueous solution containing a salt of a metal for coating such as gold or nickel is used as the plating solution for use in displacement plating and an aqueous solution containing coating metal ions at a concentration of 1 to 10 g/L is preferred.

Specific examples of the metal salt include gold potassium cyanide, chlorauric acid and gold sodium sulfite.

Of these, gold sodium sulfite is preferred because chemical damage to a plating target can be reduced.

The metal ion concentration is preferably from 1 to 10 g/L. In the case of obtaining a uniform compact film, a metal ion concentration of 1 to 5 g/L is preferred in order to intentionally reduce the deposition rate. The pH is preferably in a range of 3 to 10 and particularly 5 to 9 in order to reduce the damage to the base.

In addition, the plating solution preferably has a temperature of 50 to 95°C in order to promote the plating reaction. The thickness of the coated film can be controlled by setting the conditions such as metal ion concentration, pH and temperature but is preferably controlled by changing the treatment time because changes in the solution conditions may change the properties (e.g., density) of the film formed by plating. In this case, the treatment is preferably carried out in general for a period of about 1 to about 90 minutes in consideration of the damage to the base and the preparation efficiency.

<Stabilizing Treatment of Coated Layer>

In the practice of the invention, the stabilizing treatment of the coated layer which includes heat-treating the coated layer can be performed in order to improve the adhesion between the core and the surface layer covering the core (hereinafter also referred to as "coated layer") in the metal nanowire.

As a result of the heat treatment of the coated layer, a metallic material constituting the core and a metallic material constituting the coated layer form an alloy layer through thermal diffusion to improve the adhesion between the core and the coated layer.

The heat treatment temperature is preferably from 30 to 200°C. It is also effective to perform heat treatment at a low temperature or perform heat treatment in an inert gas atmosphere such as nitrogen gas or argon gas in order to suppress the surface oxidation of the core during the heat treatment.

[Diffusion Solvent]

Water is mainly used as the dispersion solvent in the dispersion of the invention and an organic solvent to be mixed with water may be used in combination in an amount of 80 vol% or less.

For example, an alcoholic compound having a boiling point of 50°C to 250°C and more preferably 55°C to 200°C is advantageously used as the organic solvent. The combination use of such an alcoholic compound makes it possible to improve the application in the coating step during the formation of the conductive film while reducing the drying load.

The alcoholic compound is not particularly limited but may be appropriately selected according to the purpose and specific examples thereof include polyethylene glycol, polypropylene glycol, alkylene glycol and glycerol. These may be used alone or in combination of two or more thereof.

More specifically, compounds having a low viscosity at room temperature and containing a small number of carbon atoms such as ethylene glycol, diethylene glycol, 1,2-propanediol, 1,3-propanediol, 1,2-butanediol, 1,3-butanediol, 1,4-butanediol and 2,3-butanediol are preferable but compounds containing a large number of carbon atoms such as pentanediol, hexanediol, octanediol and polyethylene glycol can also be used.

Of these, diethylene glycol is the most preferred solvent.

[Surfactant]

A surfactant is preferably used in the dispersion of the invention because the dispersion stability is more excellent.

Examples of the surfactant include a nonionic surfactant, an anionic surfactant, a cationic surfactant, an amphoteric surfactant and a fluorochemical surfactant. These may be used alone or in combination of two or more thereof.

Any conventionally known nonionic surfactant may be used without particular limitation.

Examples thereof include polyoxyethylene alkyl ethers, polyoxyethylene alkyl phenyl ethers, polyoxyethylene polystyrylphenyl ethers, polyoxyethylene polyoxypropylene alkyl ethers, partial fatty acid esters of glycerol, partial fatty acid esters of sorbitan, partial fatty acid esters of pentaerythritol, fatty acid monoesters of propylene glycol, partial fatty acid esters of sucrose, partial fatty acid esters of polyoxyethylene sorbitan, partial fatty acid esters of polyoxyethylene sorbitol, fatty acid esters of polyethylene glycol, partial fatty acid esters of polyglycerol, polyoxyethylenated castor oils, partial fatty acid esters of polyoxyethylene glycerol, fatty acid diethanolamides, N,N-bis-2-hydroxyalkylamines, polyoxyethylene alkyl amines, fatty acid esters of triethanolamine, trialkylamine oxides, polyethylene glycol (e.g., polyethylene glycol monostearate), and copolymers of polyethylene glycol and polypropylene glycol.

Any conventionally known anionic surfactant may be used without particular limitation.

Examples thereof include fatty acid salts, abietic acid salts, hydroxyalkanesulfonates, alkanesulfonates, dialkylsulfosuccinates, linear alkylbenzenesulfonates, branched alkylbenzenesulfonates, alkylnaphthalenesulfonates, alkylphenoxypolyoxyethylene propylsulfonates, polyoxyethylene alkylsulfophenyl ether salts, sodium N-methyl-N-oleyltaurate, the disodium salts of N-alkylsulfosuccinic acid monoamides, petroleum sulfonates, sulfated tallow oil, sulfates of fatty acid alkyl esters, alkyl sulfates, polyoxyethylene alkyl ether sulfates, fatty acid monoglyceride sulfates, polyoxyethylene alkylphenyl ether sulfates, polyoxyethylene styryl phenyl ether sulfates, alkyl phosphates, polyoxyethylene alkyl ether phosphates, polyoxyethylene alkylphenyl ether phosphates, partially saponified styrene-maleic anhydride copolymers, partially saponified olefin-maleic anhydride copolymers and naphthalenesulfonate-formalin condensates.

Any conventionally known cationic surfactant may be used without particular limitation. Examples thereof include alkylamine salts, quaternary ammonium salts, polyoxyethylene alkylamine salts and polyethylene polyamine derivatives.

Any conventionally known amphoteric surfactant may be used without particular limitation. Examples thereof include carboxybetaines, aminocarboxylic acids, sulfobetaines, aminosulfates and imidazolines.

In the surfactants mentioned above, the term "polyoxyethylene" may be substituted with the term "polyoxyalkylene," examples of which include polyoxymethylene, polyoxypropylene and polyoxybutylene. Surfactants containing these latter polyoxyalkylene groups can likewise be used in the invention.

Fluorochemical surfactants having perfluoroalkyl groups in the molecule are preferred surfactants in the invention.

Examples of such fluorochemical surfactants include anionic surfactants such as perfluoroalkyl carboxylates, perfluoroalkyl sulfonates and perfluoroalkyl phosphates; amphoteric surfactants such as perfluoroalkyl betaine; cationic surfactants such as perfluoroalkyltrimethylammonium salts; and nonionic surfactants such as perfluoroalkylamine oxides, perfluoroalkyl ethylene oxide adducts, oligomers containing perfluoroalkyl groups and hydrophilic groups, oligomers containing perfluoroalkyl groups and lipophilic groups, oligomers containing perfluoroalkyl groups, hydrophilic groups and lipophilic groups, and urethanes containing perfluoroalkyl groups and lipophilic groups. Preferred examples include the fluorochemical surfactants mentioned in JP 62-170950 A, JP 62-226143 A and JP 60-168144 A.

In the practice of the invention, of these surfactants, it is desirable to use one having an HLB value of 10 or more because the dispersion stability is more excellent.

The HLB (hydrophile-lipophile balance) value is a value expressing the degree of affinity of a surfactant for water and oil (a water-insoluble organic compound). The HLB value is determined on a scale of 0 to 20. A value closer to 0 indicates higher lipophilicity and a value closer to 20 indicates higher hydrophilicity.

In the practice of the invention, these surfactants may be used alone or in combination of two or more thereof.

The content of the surfactants is preferably from 0.001 to 10 wt%, and more preferably from 0.01 to 5 wt% with respect to the total weight of the metal nanowires.

[Inorganic Glass Ingredient]

An inorganic glass ingredient containing at least one element selected from the group consisting of silicon, lithium, boron and phosphorus is preferably used in the dispersion of the invention because the affinity for water or other solvent used as the dispersion solvent is not only maintained but the conductive film formed using the dispersion of the invention also has improved film quality.

Examples of the inorganic glass ingredient that may be used include raw material ingredients of glasses such as silicate glass, borate glass, phosphate glass and lithium salt glass, to be more specific, sodium silicate, sodium borate, sodium phosphate and a metal oxide lithium salt. Specific examples thereof include an aqueous solution of No. 3 sodium silicate, sodium borate ($NaBO_3$), lithium nitrate and sodium dihydrogen phosphate.

[Water-Soluble Dispersant]

In cases where the Au nanowires or the metal nanowires coated with Au are to be dispersed, water-soluble dispersants such as hydroxyl group-, carboxyl group-, sulfone group-, phosphate group-, amino group- or SH group-terminated water-soluble organic molecules, as exemplified by succinic acid, polyvinyl alcohol (PVA) and polyvinyl pyrrole (PVP) may be used in the dispersion of the invention.

If a SH group-containing organic compound is used, for example, when a dispersion containing metal nanowires dispersed in an aqueous solution is mixed with a water-insoluble liquid containing a water-insoluble dispersant, the water-insoluble dispersant containing SH groups with high affinity can be adsorbed on the surfaces of Au nanowires to efficiently move the Au nanowires to a water-insoluble fraction, thus facilitating the separation and concentration.

The SH group-containing organic compound is not particularly limited as long as it is soluble in a water-insoluble liquid and an organic compound with short molecular chain having a low vaporization temperature can be vaporized by a heating treatment such as sintering.

Examples of such a low molecular weight organic compound include 1-octanethiol and 2-furylmethanethiol.

For example, a solvent including a SH group-containing organic compound is added to an aqueous solution containing gold nanowires dispersed therein and the mixture is heated, stirred and centrifuged before collecting a solvent fraction. In the solvent fraction, the Au nanowire ingredient is concentrated and it is possible to prepare a dispersion having a desired concentration by evaporating and removing the solvent and dispersing the gold nanowires again.

The dispersion of the invention can be advantageously used as a conductive ink for forming a circuit pattern on a circuit board.

When the inventive dispersion is used as the conductive ink, the content (concentration) of the metal nanowires in the dispersion of the invention is preferably from 10 to 30 wt% and more preferably from 15 to 20 wt% with respect to the total weight of the dispersion of the invention because the circuit pattern can be printed using an ink-jet system.

[Conductive Film]

The conductive film of the invention is a conductive film formed using the above-described dispersion of the invention.

The conductive film as used in the invention is a concept including not only a film formed on the whole of the desired surface of a substrate but also the above-described circuit pattern.

There is no particular limitation on the substrate on which a conductive film is to be formed and the method of forming a conductive film, and for example, the substrate and the forming method described in JP 2010-84173 A can be adopted.

The conductive film of the invention preferably contains the metal nanowires in an amount of 0.005 to 1 g/m$^2$ and more preferably 0.01 to 0.1 g/m$^2$ because the balance between the electrical conductivity and the permeability is excellent.

The conductive film of the invention can be advantageously used as the transparent conductive film that may be employed in, for example, a touch panel, a display antistatic film, an electromagnetic shield, an organic or inorganic EL display electrode, electronic paper, a flexible display electrode, a flexible display antistatic film, a solar cell electrode and various other devices.

EXAMPLES

The present invention is described below more specifically by way of examples. However, the present invention should not be construed as being limited to the following examples.

(Example 1)

<(A-1) Mirror-Like Finishing Treatment>

A high-purity aluminum substrate (Sumitomo Light Metal Industries, Ltd.; purity, 99.99 wt%; thickness, 0.4 mm) was annealed at 400°C for 1 hour and cut to a size of 1 cm x 3 cm so that anodization could be carried out in an area of 1 cm square, then subjected to electrolytic polishing treatment under the conditions described below.

(Electrolytic Polishing Treatment)

The electrolytic polishing solution of the composition indicated below was used to carry out electrolytic polishing treatment under conditions of a current density of 5 A/dm$^2$, a solution temperature of 65°C and a solution flow velocity of 3.0 m/min to thereby remove the layer altered by the treatment.

A carbon electrode was used as the cathode, and a GP0110-30R unit (Takasago, Ltd.) was used as the power supply. In addition, the flow velocity of the electrolytic solution was measured using a vortex flow monitor FLM22-10PCW manufactured by As One Corporation.

(Composition of Electrolytic Polishing Solution)

* 85 wt% Phosphoric acid (Wako Pure Chemical Industries, Ltd.) 660 mL
* Pure water 160 mL
* Sulfuric acid 150 mL
* Ethylene glycol 30 mL

<(B-1) Anodizing Treatment>

A transfer apparatus (MODEL 6000; HiSOL Inc.) was used to transfer six times a pattern of topographic features of an SiC mold having protrusions arranged in a square array at a pitch of 100 nm (size: 5 mm square; pattern area: 3 mm x 0.5 mm; special order product manufactured by NTT Advanced Technology Corporation) to the surface of the aluminum substrate having undergone the electrolytic polishing treatment with positional changes of the mold to thereby prepare a transfer region with a size of 3 mm square. The pattern was transferred at room temperature at a transfer pressure set to 256 N/cm$^2$ per area of the protrusions.

Then, the front surface except the transfer region with a size of 3 mm square and the back surface in the aluminum substrate were masked with a commercial masking tape.

Subsequently, anodizing treatment was carried out for 4 hours using an electrolytic solution containing 0.50 mol/L of oxalic acid under the following conditions: voltage, 40 V; solution temperature, 15°C; and solution flow velocity, 3.0 m/min. An anodized film in which straight tube-shaped micropores were arranged in a honeycomb array was thus formed at the surface of the aluminum substrate.

Anodizing treatment was carried out using a stainless steel electrode as the cathode and using a GP0110-30R unit (Takasago, Ltd.) as the power supply. Use was made of NeoCool BD36 (Yamato Scientific Co., Ltd.) as the cooling system, and Pairstirrer PS-100 (Tokyo Rikakikai Co., Ltd.) as the stirring and warming unit. In addition, the flow velocity of the electrolytic solution was measured using the vortex flow monitor FLM22-10PCW (As One Corporation).

<(C-1) Aluminum Base Removal Treatment>

The aluminum substrate having undergone the anodizing treatment was immersed in a treatment solution obtained by blending 0.1 mol/L of copper chloride with a 20% aqueous solution of hydrochloric acid at a solution temperature of 15°C until the removal of the aluminum base was visually confirmed, thereby dissolving and removing the aluminum base.

<(D-1) Perforating Treatment>

After the aluminum base removal treatment, the anodized film was immersed in an aqueous solution containing 0.1 mol/L of potassium hydroxide (solution temperature: 30°C) for 30 minutes to remove the bottom of the anodized film, thereby preparing an alumina base having through-holes derived from the micropores.

A surface image and a cross-sectional image of the resulting aluminum base was taken by a high resolution field emission scanning electron microscope (S-4800 manufactured by Hitachi, Ltd.) at a magnification of 20,000X and the alumina base was found to have the shape described below:

* Thickness of the alumina base: 100 $\mu$m;
* Depth of the through-holes: 100 $\mu$m;
* Average opening size of the through-holes: 60 nm;
* Coefficient of variation of the opening size of the through-holes: 12%.

<(E-1) Heating Treatment>

The prepared alumina base was heated at a temperature of 400°C for 1 hour.

<(F-1) Metal Filling Treatment>

An Ni electrode was attached in close contact with one surface of the alumina base after the heating treatment and electrolytic plating was carried out using the Ni electrode as the cathode and platinum as the anode.

Nickel sulfate (300 g/L) kept at 60°C was used as the electrolytic solution to carry out constant-voltage pulse electrolysis, thereby manufacturing a structure having the through-holes filled with Ni.

An electroplating system manufactured by Yamamoto-MS Co., Ltd. and a power supply (HZ-3000) manufactured by Hokuto Denko Corp. were used to carry out the constant-voltage pulse electrolysis. The deposition potential was checked by carrying out cyclic voltammetry in the plating solution, after which the film side potential was set to -2 V and the electrolysis was carried out. The pulse waveform in the constant-voltage pulse electrolysis was a square waveform. Specifically, electrolysis treatment lasting 300 seconds was repeated six times with 40-second rest periods between the respective treatments, so as to provide a total electrolysis treatment time of 1800 seconds.

The surface after the filling with Ni was observed by a high resolution field emission scanning electron microscope (S-4800 manufactured by Hitachi, Ltd.) and nickel was found to be completely filled into the through-holes from the Ni electrode side and to further overflow on the surface in an amount of 10 μm.

<(G-1) Surface Planarization Treatment>

The alumina base having undergone the metal filling treatment was subjected to mechanical polishing treatment to remove the overflowing metal from the surface.

<(H-1) Alumina Removal Treatment (Preparation of Dispersion)>

The anodized film of the alumina base having undergone the surface planarization treatment was dissolved in a mixed aqueous solution of chromic acid and phosphoric acid to prepare a solution in which metal nanowires made of the metal filled into the through-holes were dispersed.

Then, a strong electric field was applied to the prepared solution to trap the metal nanowires and only the solvent was replaced by water. This was repeated to prepare a dispersion in which the metal nanowires were dispersed at a concentration of 10 wt%.

The length, the diameter (average diameter), the coefficient of diameter variation, and the ratio of the length to the diameter (aspect ratio) in the resulting metal nanowires are shown in Table 1.

(Example 2)

The method of Example 1 was repeated except that anodizing treatment was carried out by the self-ordering method according to the procedure described in JP 2007-204802 A, thereby preparing a dispersion.

To be more specific, the aluminum substrate having undergone electrolytic polishing treatment was then subjected to 5 hours of preliminary anodizing treatment with an electrolytic solution of 0.50 mol/L oxalic acid under the following conditions: voltage, 40 V; solution temperature, 15°C; and solution flow velocity, 3.0 m/min. After the preliminary anodizing treatment, the aluminum substrate was subjected to film removal treatment in which it was immersed for 12 hours in a mixed aqueous solution (solution temperature, 50°C) of 0.2 mol/L chromic anhydride and 0.6 mol/L phosphoric acid. Next, the aluminum substrate was subjected to 16 hours of re-anodizing treatment with an electrolytic solution of 0.50 mol/L oxalic acid under the following conditions: voltage, 40 V; solution temperature, 15°C; and solution flow velocity, 3.0 m/min. An oxide film having a thickness of 130 μm was thus obtained.

The preliminary anodizing treatment and re-anodizing treatment were both carried out using a stainless steel electrode as the cathode and using a GP0110-30R unit (Takasago, Ltd.) as the power supply. Use was made of NeoCool BD36 (Yamato Scientific Co., Ltd.) as the cooling system, and Pairstirrer PS-100 (Tokyo Rikakikai Co., Ltd.) as the stirring and warming unit. In addition, the flow velocity of the electrolytic solution was measured using the vortex flow monitor FLM22-10PCW (As One Corporation).

(Example 3)

The method of Example 1 was repeated except that anodizing treatment and surface planarization treatment were carried out under the conditions described below, thereby preparing a dispersion.

The alumina base obtained by perforating treatment had the shape described below. In addition, the length, the diameter (average diameter), the coefficient of diameter variation, and the ratio of the length to the diameter (aspect ratio) in the resulting metal nanowires are shown in Table 1.

<(B-3) Anodizing Treatment>

Anodizing treatment was carried out by the same method as in Example 1 except that the aluminum substrate was anodized with an electrolytic solution containing 1.0 mol/L of phosphoric acid for 4 hours under the following conditions: voltage, 200 V; solution temperature, 0°C; and solution flow velocity, 3.0 m/min.

<Shape of Alumina Base after Perforating Treatment>

* Thickness of the alumina base: 60 μm;
* Depth of the through-holes: 60 μm;
* Average opening size of the through-holes: 100 nm;
* Coefficient of variation of the opening size of the through-holes: 10%.

<(G-3) Surface Planarization Treatment>

The alumina base having undergone metal filling treatment was subjected to mechanical polishing treatment to remove a part of the surface of the alumina base (corresponding to a thickness of 10 $\mu$m) and the metal overflowing on the surface.

(Example 4)

The method of Example 1 was repeated except that alumina removal treatment was carried out under the conditions described below, thereby preparing a dispersion.

The length, the diameter (average diameter), the coefficient of diameter variation, and the ratio of the length to the diameter (aspect ratio) in the resulting metal nanowires are shown in Table 1.

<(H-4) Alumina Removal Treatment (Preparation of Dispersion)>

The anodized film of the alumina base having undergone surface planarization treatment was dissolved in a mixed aqueous solution of chromic acid and phosphoric acid to prepare a solution in which metal nanowires made of a metal filled into through-holes were dispersed.

Then, a strong electric field was applied to the prepared solution to trap the metal nanowires and only the solvent was replaced by an electroless displacement plating solution (the plating solution was prepared using Flash Gold 330 (Okuno Chemical Industries Co., Ltd.) and was adjusted to a pH of 4.6) and immersion treatment was carried out at 60°C for 10 minutes.

Then, the electroless displacement plating solution was replaced by water with the strong electric field applied to the prepared solution. This was repeated to prepare a dispersion in which the metal nanowires were dispersed at a concentration of 10 wt%.

(Example 5)

The method of Example 4 was repeated except that anodizing treatment was carried out under the conditions described below, thereby preparing a dispersion.

The alumina base obtained by perforating treatment had the shape described below. In addition, the length, the diameter (average diameter), the coefficient of diameter variation, and the ratio of the length to the diameter (aspect ratio) in the resulting metal nanowires are shown in Table 1.

<(B-5) Anodizing Treatment>

Anodizing treatment was carried out by the same method as in Example 1 except that the aluminum substrate was anodized with an electrolytic solution containing 1.0 mol/L of phosphoric acid for 1 hour under the following conditions: voltage, 200 V; solution temperature, 0°C; and solution flow velocity, 3.0 m/min.

<Shape of Alumina Base after Perforating Treatment>

* Thickness of the alumina base: 10 $\mu$m;
* Depth of the through-holes: 10 $\mu$m;
* Average opening size of the through-holes: 62 nm;
* Coefficient of variation of the opening size of the through-holes: 6%.

(Example 6)

The method of Example 1 was repeated except that metal filling treatment and alumina removal treatment were carried out under the conditions described below, thereby preparing a dispersion.

The length, the diameter (average diameter), the coefficient of diameter variation, and the ratio of the length to the diameter (aspect ratio) in the resulting metal nanowires are shown in Table 1.

<(F-6) Metal Filling Treatment>

An Au electrode was attached in close contact with one surface of the alumina base having undergone heating treatment and electrolytic plating was carried out using the Au electrode as the cathode and a copper plate as the anode.

Copper sulfate (150 g/L) kept at 60°C was used as the electrolytic solution to carry out constant current electrolysis, thereby manufacturing a microstructure having the through-holes filled with Cu.

An electroplating system manufactured by Yamamoto-MS Co., Ltd. and a power supply (HZ-3000) manufactured by Hokuto Denko Corp. were used to carry out the constant current electrolysis at a current density set to 3.5 A/dm$^2$ so that the total amount of applied electricity reached 25,000 C/dm$^2$.

The surface after the filling with Cu was observed by a high resolution field emission scanning electron microscope (S-4800 manufactured by Hitachi, Ltd.) and copper was found to be completely filled into the through-holes from the Au electrode side and to further overflow on the surface in an amount of 10 $\mu$m.

<(H-6) Alumina Removal Treatment (Preparation of Dispersion)>

The anodized film of the alumina base having undergone surface planarization treatment was dissolved in a mixed aqueous solution of chromic acid and phosphoric acid to prepare a solution in which metal nanowires made of a metal filled into through-holes were dispersed.

Then, a strong electric field was applied to the prepared solution to trap the metal nanowires and only the solvent was replaced by an electroless displacement plating solution (the plating solution was prepared using Flash Gold 330 (Okuno Chemical Industries Co., Ltd.) and was adjusted to a pH of 4.6) and immersion treatment was carried out at 60°C for 10 minutes.

Then, the electroless displacement plating solution was replaced by water with the strong electric field applied to the prepared solution. This was repeated to prepare a dispersion in which the metal nanowires were dispersed at a concentration of 10 wt%.

(Example 7)

The method of Example 1 was repeated except that anodizing treatment and surface planarization treatment were carried out under the same conditions as those in Example 2 and metal filling treatment and alumina removal treatment were carried out under the same conditions as those in Example 6, thereby preparing a dispersion.

The length, the diameter (average diameter), the coefficient of diameter variation, and the ratio of the length to the diameter (aspect ratio) in the resulting metal nanowires are shown in Table 1.

(Example 8)

The method of Example 6 was repeated except that an aqueous solution of 2-furylmethanethiol (concentration: 0.1 g/L) was used as the water-soluble dispersant instead of water when the electroless displacement plating solution was replaced in alumina removal treatment, thereby preparing a dispersion.

The length, the diameter (average diameter), the coefficient of diameter variation, and the ratio of the length to the diameter (aspect ratio) in the resulting metal nanowires are shown in Table 1.

(Example 9)

The method of Example 6 was repeated except that 0.03 g/L of polyethylene glycol monostearate (EMANON 3199V; HLB value: 19.4; Kao Corporation) was used as the surfactant together with water when the electroless displacement plating solution was replaced by water in alumina removal treatment, thereby preparing a dispersion.

The length, the diameter (average diameter), the coefficient of diameter variation, and the ratio of the length to the diameter (aspect ratio) in the resulting metal nanowires are shown in Table 1.

(Example 10)

The method of Example 6 was repeated except that anodizing treatment was carried out under the conditions described below, thereby preparing a dispersion.

The alumina base obtained by perforating treatment had the shape described below. In addition, the length, the diameter (average diameter), the coefficient of diameter variation, and the ratio of the length to the diameter (aspect ratio) in the resulting metal nanowires are shown in Table 1.

<(B-10) Anodizing Treatment>

Anodizing treatment was carried out by the same method as in Example 1 except that the aluminum substrate was anodized with an electrolytic solution containing 18 g/L of sulfuric acid for 15 hours under the following conditions: voltage, 16 V; solution temperature, 20°C; and solution flow velocity, 3.0 m/min.

<Shape of Alumina Base after Perforating Treatment>

* Thickness of the alumina base: 100 $\mu$m;
* Depth of the through-holes: 100 $\mu$m;
* Average opening size of the through-holes: 20 nm;
* Coefficient of variation of the opening size of the through-holes: 26%.

(Example 11)

The method of Example 6 was repeated except that sodium silicate was used as the inorganic glass ingredient in an amount of 2.5 wt% together with water when the electroless displacement plating solution was replaced by the water in alumina removal treatment, thereby preparing a dispersion.

The length, the diameter (average diameter), the coefficient of diameter variation, and the ratio of the length to the diameter (aspect ratio) in the resulting metal nanowires are shown in Table 1.

(Example 12)

The method of Example 6 was repeated except that disodium tetraborate was used as the inorganic glass ingredient in an amount of 1 wt% together with water when the electroless displacement plating solution was replaced by the water in alumina removal treatment, thereby preparing a dispersion.

The length, the diameter (average diameter), the coefficient of diameter variation, and the ratio of the length to the diameter (aspect ratio) in the resulting metal nanowires are shown in Table 1.

(Example 13)

The method of Example 6 was repeated except that lithium sulfate was used as the inorganic glass ingredient in an amount of 100 g/L together with water when the electroless displacement plating solution was replaced by the water in alumina removal treatment, thereby preparing a dispersion.

The length, the diameter (average diameter), the coefficient of diameter variation, and the ratio of the length to the diameter (aspect ratio) in the resulting metal nanowires are shown in Table 1.

(Example 14)

The method of Example 6 was repeated except that sodium dihydrogen phosphate and sodium borate were used as the inorganic glass ingredients together with water in amounts of 2.5 wt% and 1.0 wt%, respectively, when the electroless displacement plating solution was replaced by the water in alumina removal treatment, thereby preparing a dispersion.

The length, the diameter (average diameter), the coefficient of diameter variation, and the ratio of the length to the diameter (aspect ratio) in the resulting metal nanowires are shown in Table 1.

(Example 15)

The method of Example 6 was repeated except that alumina removal treatment was carried out under the conditions described below, thereby preparing a dispersion.

<(H-15) Alumina Removal Treatment (Preparation of Dispersion)>

The anodized film of the alumina base having undergone surface planarization treatment was dissolved in a mixed aqueous solution of chromic acid and phosphoric acid to prepare a solution in which metal nanowires made of a metal filled into through-holes were dispersed.

Then, the prepared dispersion was dropped in the upper side portion of a filter in a suction filtration apparatus and suction filtration was carried out to remove a solvent. Thereafter suction was stopped. Subsequently, an Ni displacement plating solution (SEK-797 available from Japan Kanigen Co., Ltd.) was dropped at a solution temperature of 20°C and allowed to stand for 60 seconds. Then, suction was resumed to further perform suction (rinsing) with ultrapure water to form an intermediate layer primarily composed of Ni on the surfaces of the metal nanowires.

Then, the metal nanowires were immersed in an electroless displacement plating solution (the plating solution was prepared using Flash Gold 330 (Okuno Chemical Industries Co., Ltd.) and was adjusted to a pH of 4.6) at 60°C for 10 minutes. Then, a strong electric field was applied and the electroless displacement plating solution was replaced by water. This was repeated to prepare a dispersion in which the metal nanowires were dispersed at a concentration of 10 wt%.

(Comparative Example 1)

The method of Example 1 was repeated except that anodizing treatment was carried out under the conditions described below, thereby preparing a dispersion.

The alumina base obtained by perforating treatment had the shape described below. In addition, the length, the diameter (average diameter), the coefficient of diameter variation, and the ratio of the length to the diameter (aspect ratio) in the resulting metal nanowires are shown in Table 1.

<(B-X) Anodizing treatment>

Anodizing treatment was carried out by the same method as in Example 1 except that the aluminum substrate was anodized with an electrolytic solution containing 170 g/L of sulfuric acid for 1.5 hours under the following constant current conditions: temperature, 40°C; current density: 5 A/dm$^2$.

<Shape of Alumina Base after Perforating Treatment>

    * Thickness of the alumina base: 100 $\mu$m;
    * Depth of the through-holes: 100 $\mu$m;
    * Average opening size of the through-holes: 15 nm;
    * Coefficient of variation of the opening size of the through-holes: 41%.

(Comparative Example 2)

The method of Example 1 was repeated except that metal filling treatment was carried out under the conditions described below, thereby preparing a dispersion.

The length, the diameter (average diameter), the coefficient of diameter variation, and the ratio of the length to the diameter (aspect ratio) in the resulting metal nanowires are shown in Table 1.

<(F-Y) Metal Filling Treatment>

The alumina base having undergone heating treatment was immersed in a 50°C solution at a pH of 10 containing 1.3% of boric acid for 3 minutes to activate the surface of the alumina base and rinsed with pure water.

Then, while shaking the alumina base immersed in an ammoniacal silver nitrate solution, formalin as the reducing agent was added and the treatment was performed for 10 minutes to deposit (fill) Ag into the through-holes of the alumina base through a silver mirror reaction.

After the treatment using the reducing agent, the alumina base was fully rinsed with water and further heated in a nitrogen atmosphere at 200°C for 1 hour to anneal the filled silver particles, thereby forming a continuous sintered body (in the shape of a wire).

<Dispersion Stability>

Each of the resulting dispersions was allowed to stand in a beaker at 20°C for 24 hours and then the amount of precipitating metal nanowires was visually checked.

As a result, a dispersion in which there was no difference in the concentration between the upper portion and the bottom portion in the beaker and which did not have precipitates at the bottom portion was deemed to be extremely excellent in the dispersion stability and rated 5, a dispersion in which a concentration difference could be seen between the upper portion and the bottom portion in the beaker but which did not have precipitates at the bottom portion was deemed to be excellent in the dispersion stability and rated 4, and a dispersion which had precipitates at the bottom portion was deemed to be inferior in the dispersion stability and rated 2. The results are shown in Table 1.

[Table 1]

Table 1

| | Metal type | Dispersion solvent and additive | Metal nanowire | | | | | |
|---|---|---|---|---|---|---|---|---|
| | | | Content (wt%) | Length (μm) | Diameter (nm) | Ratio of length to diameter (aspect ratio) | Coefficient of diameter variation | Dispersion stability |
| Example 1 | Ni | Water | 10 | 100 | 60 | 1666 | 12% | 4 |
| Example 2 | | Water | 10 | 100 | 60 | 1666 | 12% | 4 |
| Example 3 | | Water | 10 | 50 | 100 | 500 | 10% | 5 |
| Example 4 | Ni (Au coating) | Water | 10 | 100 | 62 | 1613 | 19% | 4 |
| Example 5 | | Water | 10 | 10 | 62 | 161 | 6% | 5 |
| Example 6 | Cu (Au coating) | Water | 10 | 100 | 63 | 1587 | 15% | 4 |
| Example 7 | | Water | 10 | 40 | 90 | 444 | 9% | 5 |
| Example 8 | | 2-Furylmethanethiol aqueous solution | 10 | 100 | 63 | 1587 | 17% | 4 |
| Example 9 | | Water polyethylene glycol monostearate | 10 | 100 | 63 | 1587 | 16% | 5 |
| Example 10 | | Water | 10 | 100 | 20 | 5000 | 26% | 4 |
| Example 11 | | Water sodium silicate | 10 | 100 | 63 | 1587 | 16% | 4 |
| Example 12 | | Water disodium tetraborate | 10 | 100 | 63 | 1587 | 16% | 4 |
| Example 13 | | Water lithium nitrate | 10 | 100 | 63 | 1587 | 16% | 4 |
| Example 14 | | Water sodium dihydrogen phosphate sodium borate | 10 | 100 | 63 | 1587 | 16% | 4 |

(continued)

| | Metal type | Dispersion solvent and additive | Metal nanowire | | | | | |
|---|---|---|---|---|---|---|---|---|
| | | | Content (wt%) | Length ($\mu$m) | Diameter (nm) | Ratio of length to diameter (aspect ratio) | Coefficient of diameter variation | Dispersion stability |
| Example 15 | Cu (Ni intermediate layer) (Au coating) | Water | 10 | 100 | 63 | 1587 | 15% | 4 |
| Comparative Example 1 | Ni | Water | 10 | 100 | 15 | 6666 | 41% | 2 |
| Comparative Example 2 | Ag | Water | 10 | 80 | 60 | 1333 | 24% | 2 |

The results shown in Table 1 revealed that the dispersion which contains metal nanowires having a large coefficient of diameter variation is inferior in the dispersion stability (Comparative Example 1).

It was also revealed that the dispersion stability is inferior when Ag is used as the metal although the coefficient of variation of the metal nanowires is less than 30%

(Comparative Example 2).

In contrast, it was revealed that the dispersion stability is excellent when specific metals are used and the metal nanowires used each have a diameter satisfying a specific coefficient of variation (Examples 1 to 15).

DESCRIPTION OF SYMBOLS

1     aluminum substrate
2     micropore
3     anodized film
4     aluminum base
5     through-hole
6     metal
10    metal nanowire

**Claims**

1. A dispersion comprising metal nanowires,
   wherein each of the metal nanowires has a diameter of 10 to 200 nm, a coefficient of diameter variation of less than 30% and a ratio of a length to the diameter (length / diameter) of 10 or more, and
   wherein the metal nanowires are metal members primarily composed of at least one metal selected from the group consisting of gold, nickel and copper.

2. The dispersion according to claim 1, wherein each of the metal nanowires has a core and a surface layer covering the core, and a metal constituting the core is different from a metal constituting the surface layer.

3. The dispersion according to claim 1 or 2, further comprising a surfactant having an HLB value of 10 or more.

4. The dispersion according to any one of claims 1 to 3, further comprising an inorganic glass ingredient containing at least one element selected from the group consisting of silicon, lithium, boron and phosphorus.

5. The dispersion according to any one of claims 1 to 4 for use in a conductive ink.

6. A conductive film formed by using the dispersion according to any one of claims 1 to 5.

7. The conductive film according to claim 6, wherein the metal nanowires are contained in an amount of 0.005 to 1 $g/m^2$.

8. The conductive film according to claim 6 or 7 for use in a transparent conductive film.

# FIG. 1

(A)

(B)

(C)

(D)

(E)

(F)

**INTERNATIONAL SEARCH REPORT**

| International application No. |
| --- |
| PCT/JP2012/061474 |

**A.  CLASSIFICATION OF SUBJECT MATTER**
*H01B1/22*(2006.01)i, *C09D5/24*(2006.01)i, *C09D11/00*(2006.01)i, *C09D201/00* (2006.01)i, *H01B1/00*(2006.01)i, *H01B5/14*(2006.01)i

According to International Patent Classification (IPC) or to both national classification and IPC

**B.   FIELDS SEARCHED**

Minimum documentation searched (classification system followed by classification symbols)
H01B1/22, B22F1/00, B22F9/00, C09D5/24, C09D11/00, C09D201/00, H01B1/00, H01B5/14

Documentation searched other than minimum documentation to the extent that such documents are included in the fields searched
Jitsuyo Shinan Koho          1922–1996    Jitsuyo Shinan Toroku Koho    1996–2012
Kokai Jitsuyo Shinan Koho    1971–2012    Toroku Jitsuyo Shinan Koho    1994–2012

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| A | JP 2010-84173 A  (Fujifilm Corp.), 15 April 2010 (15.04.2010), claims 1 to 7; paragraphs [0011] to [0017]; examples & US 2010/0078197 A1 | 1-8 |
| A | WO 2006/006462 A1  (Mitsubishi Materials Corp.), 19 January 2006 (19.01.2006), claim 13; examples & JP 2006-118036 A         & US 2007/0243401 A1 & EP 1769867 A1            & CN 1980761 A & KR 10-2007-0027713 A | 1-8 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 July, 2012 (20.07.12) | 31 July, 2012 (31.07.12) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2012/061474 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | WO 2009/063744 A1  (Konica Minolta Holdings, Inc.),<br>22 May 2009 (22.05.2009),<br>claims 9 to 10, 12; paragraphs [0048] to [0052]; examples<br>& US 2009/0130433 A1 | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005256102 A
- JP 2006062049 A
- JP 2010156005 A
- JP 2010189695 A
- US 2708655 B
- JP 3714507 B
- JP 2002285382 A
- JP 2006124827 A
- JP 2007204802 A
- JP 2007231339 A

- JP 2007231405 A
- JP 2007231340 A
- JP 2007238988 A
- JP 10121292 A
- JP 2001105400 A
- JP 2003129288 A
- JP 62170950 A
- JP 62226143 A
- JP 60168144 A
- JP 2010084173 A

**Non-patent literature cited in the description**

- Aluminum Handbook. Japan Aluminum Association, 2001, 164-165

- *Jitsumu Hyomen Gijutsu,* 1986, vol. 33 (3), 32-38